# EUROPEAN PATENT SPECIFICATION

(11) **EP 0 598 265 B1**
(45) Date of publication and mention of the grant of the patent: **20.08.1997**
(21) Application number: 93117618.4
(22) Date of filing: 29.10.1993
(51) Int. Cl.: B65H 19/18, B29C 65/20, B29C 65/00, A44B 19/42

(54) **Apparatus for automatically cutting, welding and connecting ends of tape-like articles**
Vorrichtung zum automatischen Schneiden, Schweissen und Verbinden der Enden von Bandartikeln
Dispositif automatique de coupe, soudage et assemblage des extrémités d'articles en forme de ruban

(30) Priority: 29.10.1992 JP 291229/92; 29.10.1992 JP 291230/92
(43) Date of publication of application: 25.05.1994
(73) Proprietor: YKK CORPORATION, Chiyoda-ku, Tokyo (JP)
(72) Inventor: Horikawa, Yoichi, Toyama-ken (JP); Ito, Michio, Toyama-ken (JP)
(74) Representative: Patentanwälte Leinweber & Zimmermann

(56) References cited:
- EP-A- 0 092 849
- EP-A- 0 556 534
- DE-A- 1 629 160
- FR-A- 2 198 476
- FR-A- 2 201 173
- US-A- 2 389 560

## Description

### BACKGROUND OF THE INVENTION

### 1. Field of the Invention:

This invention relates to an automatic tape-like workpiece cutting, welding and connecting apparatus for automatically cutting a predetermined length off a tape-like workpiece, such as a fastener tape, a slide fastener chain, a surface fastener tape or various kinds of ribbons, welding the cut end of the predetermined length of tape-like workpiece to that of another tape-like workpiece previously prepared, and at the same time, pressing the welded portion of the two workpieces on upper and lower surfaces to connect the welded portion successively.

### 2. Description of the Related Art:

The conventional art of the type described above is exemplified by a fastener tape connecting method disclosed in Japanese Patent Laid-Open Publication No. HEI 2-239805. This method was developed in order to effectively meet the demands for flexible manufacturing in recent years.

For example, fashionability is increasingly demanded for slide fasteners in recent years; even the same type of fastener tapes require swelling kinds of colors, and an amount of fastener tape of the same color for one order is at most several tens of meters.

Consequently an attempt could be considered to previously manufacture a lot of slide fasteners of the same color and, for every delivery, a desired length is cut off the slide fastener at need. However, this measure cannot be actually practical since it would be very difficult in inventory management as it is impossible to substitute one for the other which color is slightly different. To this end, as a typical conventional method, fastener tapes of different colors are cut into necessary lengths and the resulting fastener tapes are fed to a coupling-element mounting station while they are connected end to end, thus rationalizing the coupling-element mounting step. In this case, the successive fasteners overlap one another at end, whereupon the overlapping ends are stapled or welded by ultrasonic waves or high frequency waves.

According to the method disclosed in the above-mentioned publication, it is possible to cope with the problems, e.g., that when the successive fastener tapes are connected end to end by a stapler or welded by ultrasonic waves or high frequency waves, coupling elements would be difficult to mount at uniform pitch or the welded portions tend to become not firm. Specifically, the ends of the fastener tapes to be connected are butt-welded, and then the protuberant welded portion is pressed on sides to form a film in such a manner that the opposite surfaces of the butt-welded portions will be flush with those of the remaining tape portions. The resulting tapes are free from any projection on the opposite surfaces of the welded portion and secure adequate flexibility and firm connection so that coupling elements can be mounted stably.

More specifically, in the method of the above-mentioned publication, the ends of first and second tapes drawn by a predetermined length are gripped respectively by a pair of grippers, which are pivotally movable toward and away from each other about a common pivot, and then these ends are fused by a heater having an equilateral triangle substantially complementary to the space defined between the confronting ends, whereupon the heater is retracted and the grippers are moved toward each other until the distal end portions are butt-welded. Then the gripping by the grippers is released, and the welded portion is moved into one gripper, whereupon the grippers are reactivated to press protuberances of the welded portion from opposite sides, making the welded portion flat. The flat welded portion is then covered with a film.

However, the first and second tapes are arranged at a predetermined angle to each other in the same plane before the welding of the ends and these tapes will not be placed in a common straight line until the welding of the ends. Therefore it is not only difficult to bring the confronting ends of the tapes with uniform force but also necessary to move the supply unit of the succeeding one of the connected tapes into the travelling path when the subsequent mounting step of coupling elements is to be performed without interruption. Further, in order to form a film by pressing the welded portion, the molten or half-molten fused portion must be moved onto one gripper, so that one welded portion might come off.

US-A-2389560 discloses an apparatus for making thermoplastic joints. A fixed clamp and a movable clamp are adapted to move ends of strips to be connected towards one another. There is provided a blade or knife which may be heated to 350 °F and which is adapted to be situated between the two strips to be connected with the ends thereof abutting the blade or knife. Thereby, said ends of the strips are heated and melted. The molten ends are moved towards one another by said clamps. Excess material is squeezed up and down in respective V-shaped grooves formed between the clamps. The respective strips have a narrow neck and can be stripped off or will be sheared off by the edges of the clamps.

FR-A-2,201,173 discloses a method for thermical welding two parts of plastic material to one another. On one side surface of the material to be welded, there is provided a flattening element, serving for flattening said one side.

### SUMMARY OF THE INVENTION

With the foregoing problems in view, it is an object of this invention to provide an apparatus for automatically cutting, welding and connecting ends of tape-like workpieces successively, which apparatuses can perform flexible manufacturing efficiently and stably.

In order to solve the above problems, according to the invention, there is provided an apparatus for automatically cutting, welding and connecting ends of tape-like workpieces, comprising:
first and second tape grippers situated along a travelling path of a tape-like workpiece in opposite to each other for releasably gripping the tape-like workpiece and for moving toward and away from each other in the travelling path; a cutter situated between the first and second tape grippers for cutting the tape-like workpiece transversely; and means for welding a trailing end of a preceding tape-like workpiece with a leading end of a succeeding tape-like workpiece and for shaping the welded portion of the successive tape-like workpieces flat by pressing the welded portion from upper and lower sides,
   wherein said first and second grippers are adapted to move confronting ends of said workpieces towards each other into abutting contact and to keep them in this position while said welding and shaping means is active.

Preferably, the apparatus further comprises a control unit for program-controlling the operation procedure of the above-mentioned individual components of the apparatus according to a preset procedure and for driving the individual components according to the program-controlled operation procedure. The cutter and the welding and shaping means may be incorporated in a single body to be switchably positioned transversely of the travelling path of the tape-like workpiece. The welding and shaping means may include a pair of shaping pushers having confronting pressing surfaces, and a heater situated on a side opposite to the pressing surface of one of the shaping pushers and having parallel front and rear surfaces along the tape travelling path. The apparatus may further comprise scrapers engageable with the front and rear surfaces of the heater for scraping off resin stuck to the front and rear surfaces.

Alternatively, the cutter and the welding and shaping means may be independent of each other and may be activated individually.

Preferably, the apparatus comprises: a tape exchange and supply unit including a predetermined number of take-up spools for winding up respective tape-like workpieces in a common direction, and means for supporting the spools in row, the supporting means being capable of selectively moving each of the spools to a predetermined position; means, situated at a fixed position forwardly of and near to the tape exchange and supply unit, for moving the tape-like workpiece forwardly and backwardly to a predetermined length in the travelling path; wherein said first and second tape grippers are situated downstream of the moving means.

The tape exchange and supply unit may include a spool pallet, a detachably attaching portion for locking the spool pallet in a fixed position, and a slide table movable to a position in alignment with the supporting means. Alternatively the spool pallet may be movable to a position in alignment with the supporting means. And the spool pallet may be exchangeable with another. The supporting means may be equipped with a spool exchange mechanism. The restricting and releasing of the restricting and releasing means may take place in response to the forward and backward movements of the tape-like workpiece by the moving means. The moving means may include a pair of pressing rollers movable into and out of press contact with opposite surfaces of the tape-like workpiece and rotatable a predetermined number of rotations when they are in press contact with the tape-like workpiece. The apparatus may further comprise a control unit for program-controlling the operation procedure of the above-mentioned individual components of the apparatus according to a preset procedure and for driving the individual components according to the program-controlled operation procedure. The apparatus may further comprise a guide plate, which is situated at a front end of the spool pallet along an imaginary line passing both the supporting means and the restricting and releasing means of the tape exchange and supply unit and has a tape exposing surface on which the tape-like workpiece is to be exposed and a fitting surface in which the pressing rollers are fitted, for gripping and guiding the tape-like workpiece.

In connection with the example in which the tape exchange and supply unit is equipped with a slide table and a spool pallet, the manner in which the preceding tape is cut and the end of the succeeding tape is connected to the cut end of the preceding tape will be described as follows: when coupling elements have been molded on a predetermined length of the preceding tape-like workpiece as the latter is drawn into, for example, an injection molding machine, the first and second tape grippers will be activated in response to an instruction from the control unit to grip the tape-like workpiece from opposite sides at front and rear positions, thereby holding the tape-like workpiece immovable. At that time, the cutter of the tape cutting, welding and connecting unit is located centrally between the first and second tape grippers, and upper and lower blades are located on the upper and lower sides of the tape-like workpiece. Then the blades are activated, and the tape-like workpiece is cut simultaneously at the front and rear positions so that the cut ends of the tape-like workpiece are projecting from the opposite ends of the first and second tape grippers by a predetermined length.

When the tape-like workpiece is thus cut, the upper and lower constant-length feed rollers, which assume their waiting positions over and under the guide plate, will be moved toward each other to press the opposite surfaces of the exposed part of the tape-like workpiece while the rollers are fit in the fitting surface of the guide plate. At the same time, the restricting means restricting the movement of the tape-like workpiece will be released. Then the first tape gripper will be activated so as to release the rear cut tape end, while the second tape gripper will keep gripping the front cut tape end.

Then the upper constant-length feed roller makes a predetermined number of rotations as driven in a direction opposite to the supply direction of the tape-like workpiece, thus retracting the tape-like workpiece backwardly by a predetermined length. After this retracting, the upper and lower constant-length feed rollers are activated so as to move away from each other, and at the same time, the restricting means is reactivated to restrict the movement of the succeeding tape-like workpiece.

Subsequently, by a signal from the control unit, the slide table is moved along the table guide rail until the spool on which the tape-like workpiece to be processed next time is wound will reach a position on the travelling path extending through the upper and lower constant-length feed rollers and the first and second tape grippers, thus fixing the position of the spool pallet.

When the slide table is stopped and secured at a fixed position, the upper and lower constant-length feed rollers will be reactivated to move toward each other so that they will be fitted in the fitting surface of the guide plate, which guides the succeeding tape-like workpiece, to press the opposite surfaces of the exposed part of the tape-like workpiece exposed from the guide plate. At the same time, the restricting means will be activated to release the succeeding tape-like workpiece from restriction. At that time, the tape cutting, welding and connecting unit has already been moved transversely of the tape-like workpiece from the position that the cutter is in alignment with the travelling path to the position that the welding and connecting means is in alignment with the travelling path, and the welding and connecting means is positioned in the travelling path of the tape-like workpiece.

Now, the upper constant-length feed roller starts rotation to feed the succeeding tape-like workpiece by a predetermined length so that the tape-like workpiece is threaded through the first tape gripper until the leading end projects to a predetermined extent from the front end surface of the first tape gripper, namely, to an extent that the leading end can come into contact with the rear surface of the heater of the welding and connecting means. Upon termination of feed of the tape-like workpiece, the first tape gripper is activated to grip the end of the succeeding tape-like workpiece from upper and lower sides, and at the same time, the heater of the welding and connecting means together with the lower pressing means is raised so that the preceding tape-like workpiece and the succeeding tape-like workpiece projecting from the confronting ends of the first and second tape grippers come into contact with the front and rear surfaces of the heater to become molten.

Then, after the heater is lowered together with the lower pressing means, the first and second tape grippers with the ends of the tape-like workpieces gripped are moved toward each other to bring their confronting ends against to each other. Thereafter the upper and lower pressing means are moved toward each other to press the welded portion from upper and lower sides. This pressing makes the molten protuberant welded portion flat expanding longitudinally over the end portions of the two tape-like workpiece.

After the film is hardened, the upper and lower pressing means are moved away from each other, and at the same time, the first and second tape grippers release the tape-like workpieces, thus finalizing the connecting of the tape ends. Upon termination of welding of the tape ends, the feed rollers are activated to start supplying the tape-like workpiece to the next station. Following the feed rollers, there may be situated a marking unit for putting a mark on the welded portion.

When every spool on the spool pallet is emptied, the spool pallet is removed from the slide table for exchange with a new spool pallet carrying a plurality of spools for next use. Alternatively when some of the spools on the spool pallet are emptied, they may be exchanged with new ones individually.

### BRIEF DESCRIPTION OF THE DRAWINGS

FIG. 1 is a fragmentary perspective view showing an automatic machine, for connecting fastener tapes successively, as a typical embodiment of an automatic machine, for connecting tape-like workpieces successively, of this invention;
FIG. 2 is a side view of the connecting machine when constant-length feed rollers are out of operation;
FIG. 3 is a side view of the connecting machine when the constant-length feed rollers are in operation;
FIGS. 4(a) through 4(c) illustrate the operation of a welding and shaping unit of the connecting machine;
FIG. 5 is a side view of a modified welding and shaping unit of the connecting machine, showing the welding and shaping unit when melting the tape ends; and
FIG. 6 is a side view of the welding and shaping unit when connecting the tape ends.

### DETAILED DESCRIPTION

An embodiment of this invention will now be described in detail with reference to the accompanying drawings.

The embodiment is an automatic connecting machine for cutting a pair of fastener tapes when they have been supplied by a predetermined length to the next station and for connecting the cut end of the fastener tape pair to the leading end of a succeeding fastener tape pair of a different color. This invention should by no means be limited to this illustrated embodiment. For example, in the illustrated embodiment, the slide table and the spool pallet are independent of each other, and a tape exchange and supply unit is slidably mounted on the slide table, and the spool pallet is detachably mounted on the slide table. Alternatively, the slide table may be omitted, and the spool pallet may be slidably mounted directly on the tape exchange and supply unit.

Further, various parts of the automatic connecting machine of this invention may be controlled and driven full-automatically or semi-automatically based on the instructions from a control unit. In this illustrated embodiment, the workpiece is a fastener tape; alternatively, the workpiece may be a slide fastener chain, a surface fastener tape, an ordinary ribbon tape, etc.

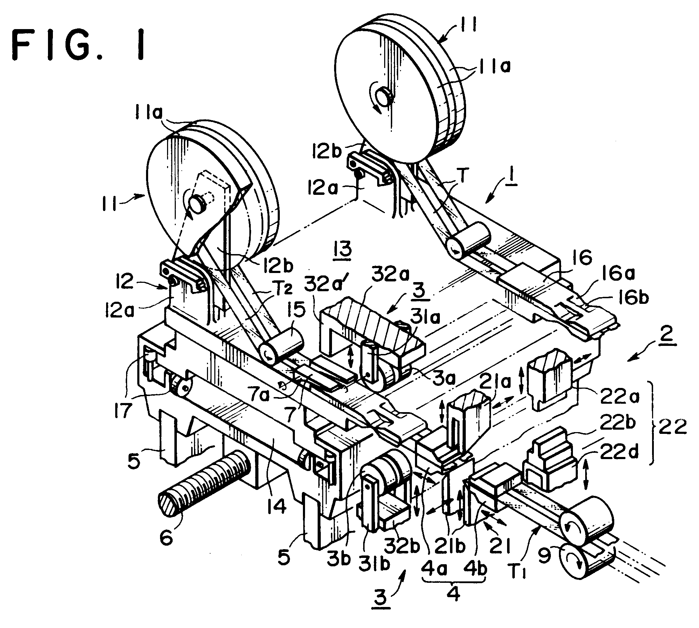

FIG. 1 is a perspective view showing the main part of the automatic connecting machine. As is apparent from FIG. 1, the automatic connecting machine comprises a tape exchange and supply unit 1, a tape cutting, welding and shaping (connecting) unit 2, a constant-length feed roller pair 3, and a set of front and rear tape grippers 4.

The tape exchange and supply unit 1 includes a portion for selectively supplying a plurality of fastener tape pairs to the tape cutting, welding and shaping unit 2. The tape exchange and supply unit 1 also includes a spool pallet 13 on which a plurality of support brackets 12 each with a tape cassette 11 attached are arranged along the rear end portion of the spool pallet 13, and a slide table 14 on which the spool pallet 13 is detachably supported and guided and which is to be driven and controlled while being positioned in parallel to the support brackets 12. In the tape travelling path on each support bracket 12 of the spool pallet 13, a tape guide roller 15 is horizontally mounted perpendicularly to the tape travelling path. From the front edge of the spool pallet 13 in the tape travelling path, upper and lower guide plates 16 extend horizontally for guiding a pair of fastener tapes T (hereinafter called "the tape T") while restricting the space between the tapes.

The support bracket 12 includes a base 12a extending upwardly from the upper surface of the spool pallet 13, and a spool support member 12b pivotally connected at its lower end to the base 12a and movable through a predetermined angle between a vertical position and a backwardly inclined position. The spool support member 12b has a non-illustrated locking mechanism for locking the spool support member 12b in the vertical position. The tape cassette 11 is detachably attached to the upper portion of the spool support member 12b in a single action by a non-illustrated detachment/attachment mechanism. The tape cassette 11 may include a pair of spools 11a on which tapes T of the same kind are wound, the spools being accommodated in a cartridge from which the tapes T can be drawn individually.

On the other hand, the spool pallet 13 is detachably mounted on the slide table 14 for exchange with a new one. For this purpose, the slide table 14 has a spool pallet attaching portion to which a plurality of pallet guide rollers 17 for guiding the spool pallet 13 on its rear and side surfaces are attached. The spool pallet 13 inserted along the spool pallet attaching portion of the slide table 14 is positioned in a fixed position and locked there by a non-illustrated locking mechanism. By releasing the locking mechanism, it is possible to remove the spool pallet 13 easily from the slide table 14.

In this invention, since the support brackets 12 are not directly mounted on the slide table 14 and the spool pallet 13 carrying the support brackets 12 for supporting the spools 11a are detachably mounted on the slide table 14 so as to be exchangeable with a new one, it is possible to exchange the plural spools 11a with new ones at once if subsequent tape cassettes 11 are previously set in the spool pallets 13 according to production planning, thus improving the rate of production remarkably.

The slide table 14 is supported by a pair of table guide rails 5 and is slidable therealong. As a bowl screw 6 is rotated by a control and drive unit such as a servo motor based on an instruction from a non-illustrated control unit, a desired one out of the plural tape cassettes 11 arranged on the slide table 14, i.e. the spool pallet 13 is selected and is moved along the table guide rails 5 to a predetermined stop position. This stop position is located in a straight line passing through the tape cutting, welding and shaping unit 2, the constant-length feed roller pair 3 and the front and rear tape grippers 4, all arranged along the travelling path of the tapes T2 leading to the next station.

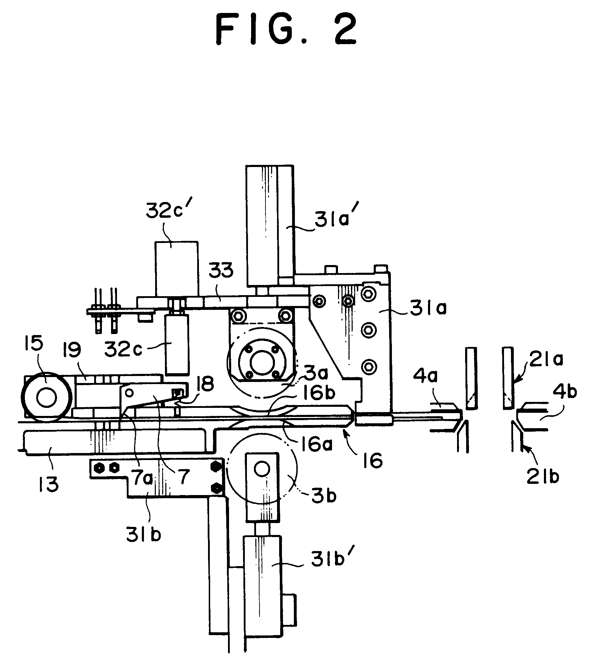

Between the guide roller 15 and the guide plates 16, there is situated a pair of tape stoppers 7 in the respective travelling paths of a pair of tapes T2. The tape stoppers 7 together with the tape guide roller 15 are situated in the travelling paths of the tapes T2 drawn from the respective tape cassette 11. As shown in FIG. 2, each of the tape stoppers 7 is pivotally connected at the upstream end to a non-illustrated support member on the spool pallet 13 and has a claw 7a on the lower surface of the upstream end, there being a compression spring 18 between the front end of each tape stopper 7 and the guide plates 16. In the example shown in FIG. 2, this support member for the tape stoppers 7 also serves as a support member 19 for the guide roller 15.

The upper and lower guide plates 16 guide the tapes T2 as sandwiched, and have fitting surface 16a on which confronting surfaces of the upper and lower constant-length feed rollers 3 are partly received, each fitting surface having a central slit-like cutout 16b. The constant-length feed rollers 3 are situated upwardly and downwardly of the fitting surfaces 16a and are rotatably supported by the respective support brackets 31a, 31b, as shown in FIG. 1. The upper constant-length feed roller 3a is driven forwardly to make a predetermined number of rotation by, for example, a non-illustrated stepping motor, while the lower constant-length feed roller 3b rotates freely. In the example of FIG. 1, the support brackets 31a, 31b are fixed to the upper and lower blocks 32a, 32b, via which the upper and lower feed rollers 3a, 3b are controlled and moved toward and away from each other by a drive source such as a non-illustrated cylinder.

A vertical projection 32a' extends from the lower surface of the rear end of the upper block 32a; when the upper block 32a is lowered, the lower end of the vertical projection 32a' pushes the upper surface of the front end of the tape stoppers 7 to cause the tape stoppers 7 to pivotally move about their rear ends against the resilience of the compression spring 18. In the example of FIG. 2, three cylinders 31a', 31b', 32c' are directly attached respectively to the support brackets 31a, 31b of the upper and lower constant-length feed rollers 3a, 3b and a hammer member 32c corresponding to the vertical projection 32a', each cylinder 31a', 31b', 32c' being fixed to a frame 33 which is fixed to a non-illustrated machine base.

When the vertical projection 32a' or the hammer member 32c is in the raised position, the claws 7a of the tape stoppers 7 press the tapes T2 between the guide roller 15 and the guide plates 16 against the upper surface of the spool pallet 13 under the resilience of the compression spring 18, thus stopping the tapes T2. When the vertical projection 32a' or the hammer member 32c is lowered to angularly move the tape stoppers 7 against the compression spring 18, the claws 7a are moved away from the tapes T2 so that the tapes T2 can move freely. The movements of these parts should take place in timed relation to the movements of the upper and lower constant-length feed rollers 3a, 3b.

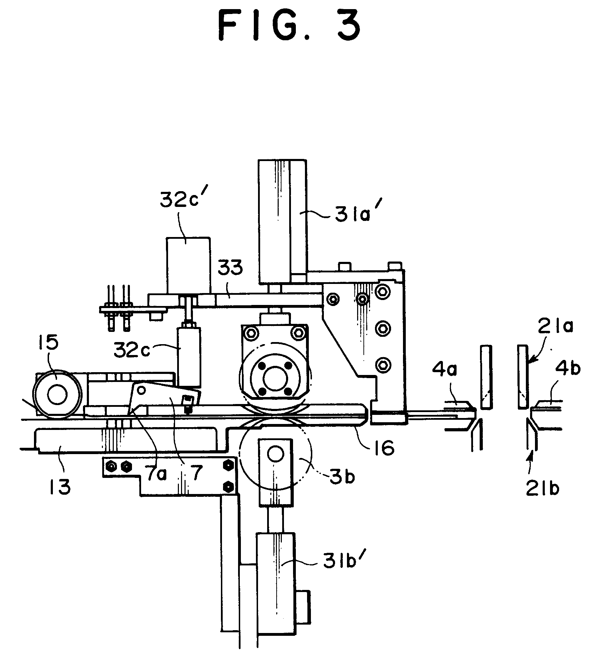

In operation, as is apparent from FIGS. 2 and 3, when the upper and lower constant-length feed rollers 3a, 3b are activated to move toward each other, the hammer 32c will be lowered to angularly move the claw 7a, which presses the tape T, upwardly so that the tape T can move freely. On the other hand, when the upper and lower constant-length feed rollers 3a, 3b are activated to move away from each other, the hammer member 32c will be raised to allow the tape stopper 7 to angularly move under the resilience of the compression spring 18 so that the claw 7a will come into engagement with the tape T between the guide roller 15 and the guide plates 16 to stop the movement of the tape T.

In front of the guide plates 16, there are arranged first and second tape grippers 4a, 4b confronting longitudinally of the travelling path of the tape T. The tape grippers 4a, 4b grip the tape T from upper and lower sides and release the tape T and are movable longitudinally of the travelling path of the tape T according to a predetermined procedure described below.

The tape cutting, welding and shaping unit 2 includes a cutter 21 for cutting the tapes between the tape grippers 4a, 4b after the tape T of a length necessary for the next process are supplied to the next station and a welding and shaping means 22 for butt-welding the leading end of the different-color tape T2, which is gripped by the first tape gripper 4a, with the end of the previous cut tape T1, which is gripped by the second tape gripper 4b after exchanging the cut tape T with another tape T2. The welding and shaping means 22 also shapes the welded portion by pressing it from upper and lower sides. The cutter 21 and the welding and shaping means 22 compose one unit. The tape cutting, welding and shaping unit 2 is situated extending transversely in the space between the first and second tape grippers 4a, 4b. As shown in FIG. 1, the cutter 21 and the welding and shaping means 22 are controllably moved vertically and horizontally in the plane perpendicular to the travelling path according to a predetermined procedure.

The cutter 21 includes upper and lower blades 21a, 21b; the upper blade 21a is solely moved vertically by a non-illustrated cylinder while the lower blade 21b is mounted on a non-illustrated base frame at a fixed position. Two sets of upper and lower blades 21a, 21b are arranged along the travelling path of the tape with a predetermined longitudinal space therebetween.

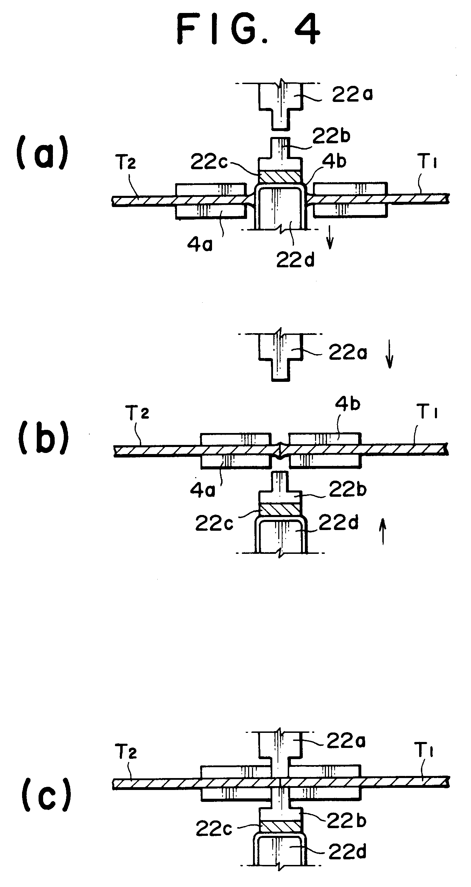

Further, the welding and shaping means 22, as schematically shown in FIGS. 1 and 4, includes upper and lower pushing members 22a, 22b, and a heater 22d fixedly attached to the lower surface of the lower pushing member 22b via an insulating material 22c. The upper and lower pushing members 22a, 22b have pushing surfaces on their confronting portions. The front and rear surfaces of the heater 22d are vertical and are covered with fluoric resin. The thus constructed welding and shaping means 22 melts the ends of the preceding and succeeding tapes T1, T2 and presses the welded portion from upper and lower sides to form a film over the welded tape portion, in cooperation with the first and second tape grippers 4a, 4b.

Following the tape exchange and supply unit 1, the tape cutting, welding and shaping unit 2, the constant-length feed roller pair 3, and the front and rear tape gripper pairs 4, there is situated feed rollers 9, in the travelling path of the tape, for feeding the successive tapes T, for which the welding of their ends have been completed, to the next station.

The automatic connecting machine of this embodiment is applied to the production of a slide fastener chain, in which coupling elements of synthetic resin are mounted on a pair of fastener tapes by injection molding.

Regarding the above embodiment, the manner in which the preceding tape is cut off and the cut end of the preceding tape is welded with the end of the succeeding tape will now be described with reference to the accompanying drawings.

Upon completion of molding of coupling elements on the tape T1 as inserted by a predetermined length into a non-illustrated injection molding machine, a non-illustrated cylinder is driven, according to an instruction from a non-illustrated control unit, to activate the first and second tape grippers 4a, 4b to grip the tape T1 at front and rear positions, thus fixing the position of the tape T1. At that time, the cutter 21 of the tape cutting, welding and shaping unit 2 is located between the first and second tape grippers 4a, 4b, while the upper and lower blades 21a, 21b are located over and under the tape T1. Then the blades 21a, 21b are activated by non-illustrated cylinders to cut the tape T1 simultaneously at front and rear positions. In this case, the blades 21a, 21b are arranged in such a manner that the cut ends of the tape T1 project from the confronting ends of the first and second tape grippers 4a, 4b by a predetermined length.

When the tape T1 is cut, the upper and lower constant-length feed rollers 3a, 3b waiting at positions above and under the guide plates 16 are moved toward each other, as shown in FIG. 2, to come into press contact with the upper and lower surfaces of the tape T1 left rearwardly (leftwardly and upwardly in FIG. 1) at the cutout 16b of the guide plates 16. At the same time, the vertical projection 32a' of the upper block 32a pushes the end of the tape stopper 7 to release the tape T1 from the claw 7a (FIG. 3). Then the first tape gripper 4a is activated to release the end of the succeeding (leftward and upward in FIG. 1) tape. At that time, the second tape gripper 4b is kept gripping the end of the preceding tape T1. The upper constant-length feed roller 3a is then driven to make a predetermined number of rotations in a direction opposite to the direction of feeding the tape T1, thus retracting the tape T1 rearwardly. Upon termination of this retracting, the upper and lower constant-length feed rollers 3a, 3b are moved away from each other and, at the same time, the claw 7a is raised under the resilience of the compression spring 18 to hold the succeeding tape T1 against the upper surface of the spool pallet 13.

Subsequently, as a signal is issued from the non-illustrated control unit, the bowl screw 6 makes a predetermined number of rotations to move the tape exchange and supply unit 1 along the table guide rails 5. When the tape cassette 11 on which the tape T2 to be processed next time is wound reaches the travelling path of the tape extending through the upper and lower constant-length feed rollers 3a, 3b and the first and second tape grippers 4a, 4b, the rotation of the bowl screw 6 is stopped so that a non-illustrated locking unit is activated to lock the position of the slide table 14.

When the slide table 14 is stopped at a predetermined position and locked there, the upper and lower constant-length feed rollers 3a, 3b are again moved toward each other to come into contact with the fitting surfaces 16a of the guide plates 16 guiding the tape T2 as sandwiched therebetween and to compress the tape T2, which is exposed from the cutout 16b, from upper and lower sides. At the same time, the vertical projection 32a' of the upper block 32a pushes the upper surface of the front end of the tape stopper 7 to angularly move the tape stopper 7 against the resilience of the compression spring 18, thus releasing the tape T2 from the engagement of the claw 7a. At that time, the tape cutting, welding and shaping unit 2 is moved transversely of the tape to position the welding and shaping means 22 in the travelling path of the tape.

Now, the upper constant-length feed roller 3a starts rotation to feed the tape T2 by a predetermined length so that the tape T2 is inserted into the first tape gripper 4a until its leading end projects from the front end surface of the first tape gripper 4a to a predetermined extent. This extent of projection is such that the leading end of the tape T2 contacts the surface of the heater 22d of the welding and shaping means 22 as shown in FIG. 4(a). Upon termination of this tape feeding, the first tape gripper 4a is activated to grip the end of the tape T2 from upper and lower sides, and at the same time, the heater 22d of the welding and shaping means 22 together with the lower pushing member 22b is raised so that the ends of the preceding and succeeding tapes T1, T2 projecting from the confronting ends of the first and second tape grippers 4a, 4b are brought into contact with the opposite side surfaces of the heater 22d to melt.

Then, the heater 22d together with the lower pushing member 22b is lowered, and the first and second tape grippers 4a, 4b are moved toward each other, while gripping the ends of the tapes T1, T2, so that these ends will be butt-welded as shown in FIG. 4(b). Thereafter, the upper and lower pushing members 22a, 22b are moved toward each other to press the welded portion from upper and lower sides. This pressing makes the protuberant welded portion flat expanding longitudinally to form a film over the welded portion of the tapes T1, T2.

When the film over the end portions of the tapes T1, T2 is hardened, the upper and lower pushing members 22a, 22b are moved away from each other, and the first and second tape grippers 4a, 4b also release the tapes T1, T2, thereby finalizing the connecting of the tape ends.

Upon termination of connecting of the tape ends, the feed rollers 9 are activated to start supplying the tape T to the next station, i.e., an injection molding machine where coupling elements are continuously molded on the tape T. Though there is no illustration in the drawings, following the feed rollers, there may be situated a marking unit for making two V cutouts one on each side of the welded portion of the tape at the end of the manufacturing of products.

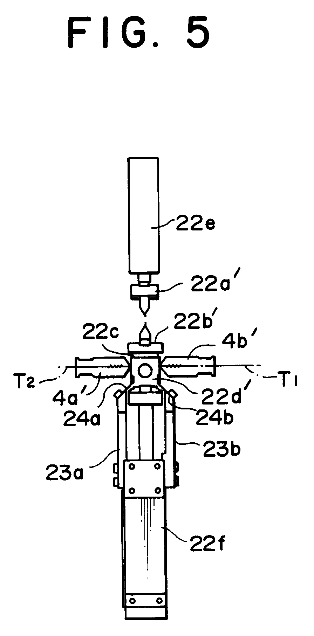

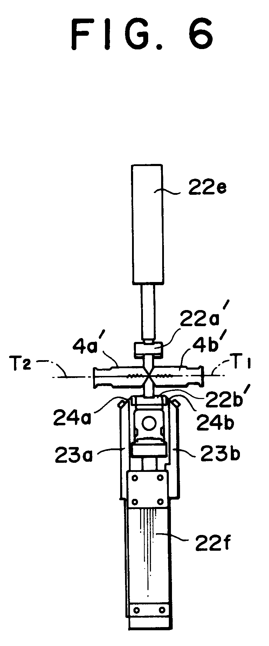

FIGS. 5 and 6 show the operation of a modified welding and shaping means 22 constituting the main part of the tape cutting, welding and shaping unit 2 of this invention. In the modified embodiment, the procedure of this welding and shaping means 22 is identical in principle with that of the foregoing embodiment, and the welding and shaping means 22 is substantially identical also in construction with the foregoing embodiment except a part.

In the embodiment of FIGS. 5 and 6, the upper and lower pushing members 22a', 22b' each has a generally T-shape cross section, having an acute end serving as a pushing surface. A heater block 22d' is fixedly attached to the lower surface of the lower pushing member 22b' via an insulating material 22c, and the surface of heater block 22d' is treated with fluoric resin. The upper pushing member 22a' and the lower pushing member 22b' to which the heater block 22d' is fixed are directly attached to upper and lower cylinders 22e, 22f, respectively, which controllably drive the upper and lower pushing members 22a', 22b' individually. The confronting ends of the first and second tape grippers 4a', 4b' have an obtuse cross-sectional shape complementary to the shape of the ends of the upper and lower pushing members 22a', 22b' in order to contact the front and rear inclined surfaces.

The welding and shaping means 22 of this embodiment is substantially identical in construction with the embodiment of FIG. 4 except the following. In this embodiment, two brackets 23a, 23b are projecting upwardly one from each of the front and rear surfaces of the lower cylinder 22f. Obliquely attached to the ends of the respective brackets 23a, 23b are blade-like scrapers 24a, 24b which come into frictional contact with the front and rear surfaces of the heater block 22d' in response to the activation of the lower cylinder 22f. The scrapers 24a, 24b serve to remove molten resin stuck to the front and rear surfaces of the heater block 22d'.

With this arrangement, when the first tape gripper 4a' is activated to grip the end of the tape T2 from upper and lower sides, the heater block 22d' of the welding and shaping means 22 together with the lower pushing member 22b' is raised to bring the preceding and succeeding tapes T1, T2, which are projecting from the confronting ends of the first and second tape grippers 4a, 4b, into contact with the front and rear surfaces of the heater block 22d' to fuse.

Subsequently, when the heater block 22d' together with the lower pushing member 22b' is lowered, the scrapers 24a, 24b slide vertically on the front and rear surfaces of the heater block 22d' to remove from the front and rear surfaces of the heater block 22d' resin which is stuck thereto when the preceding and succeeding tapes T1, T2 are molten, thus preventing the heating efficiency at the surfaces of the heater block 22d' from lowering.

After the heater block 22d' together with the lower pushing member 22b' is lowered, the first and second tape grippers 4a', 4b' with the ends of the tapes T1, T2 gripped thereby are moved toward each other to butt-weld the tape ends. Then the upper and lower pushing members 22a', 22b' are moved toward each other to press the welded portion from upper and lower sides as shown in FIG. 6. This pressing makes the molten protuberant welded portion flat expanding longitudinally to form a film over the end portions of the two tapes T1, T2.

When the film over the welded portion of the tapes T1, T2 becomes hard, simultaneously the upper and lower pushing members 22a', 22b' are moved away from each other and also the first and second tape grippers 4a', 4b' release the tapes T1, T2, thus finalizing the connecting of the tape ends.

The procedure and operation of the individual parts and units will take place fully automatically according to a control circuit and a program preloaded in a non-illustrated control unit; for example, all procedure except writing new data such as the length of a tape-like workpiece to be processed will take place continuously and automatically.

This invention should by no means be limited to the foregoing embodiments. For example, in the above embodiments, two spools are accommodated in a cassette supported by the support means; alternatively the individual spools may be supported by the supporting means. Various other modifications may be suggested; the tape-like workpiece to be processed is not limited to a fastener tape and may be another form, such as a slide fastener chain, a surface fastener tape or an ornamental tape, if they are thermally fusible.

As is apparent from the foregoing description, according to the automatic connecting machine of this invention, assuming that the spool pallets are used and are detachably supported on the slide table, it is possible to exchange a plurality of spools with new ones simultaneously by exchanging only the spool pallet with a new one if spools to be used for the next and after are already arranged on the new spool pallet, thus improving the rate of production remarkably. In this invention, the slide table and the spool pallet may be united in a single body, and the unitary spool pallet may be detachably attached to the tape exchange and supply unit; in either case, on the spool pallet, the spools can be exchanged with new ones.

Further, since the ends of the first and second tapes are in a common plane and in a common straight line, it is possible to bring the confronting ends of the tapes against each other by a uniform force. As a result, it is not only possible to perform the connecting uniformly, but also unnecessary to change the travelling path of the tape when continuously mounting coupling elements in the next step. Still further, since the molten welded portion is shaped into a film as it is pressed in the same position without being moved from the welding position, it is possible to realize firm connection without any trouble such as peeling off. It is therefore possible to perform flexible manufacturing of tape-like workpieces efficiently and stably and also to cope with such flexible manufacturing to details.

## Claims

1. An apparatus for automatically cutting, welding and connecting ends of tape-like workpieces, comprising:
(a) first and second tape grippers (4a, 4b) situated along a travelling path of a tape-like workpiece (T) in opposite to each other for releasably gripping the tape-like workpiece (T) and for moving toward and away from each other in the travelling path;
(b) a cutter (21) situated between said first and second tape grippers (4a, 4b) for cutting the tape-like workpiece (T) transversely; and
(c) means (22) for welding a trailing end of a preceding tape-like workpiece (T1) with a leading end of a succeeding tape-like workpiece (T2) and for shaping the welded portion of the successive tape-like workpieces (T1, T2) flat by pressing the welded portion from upper and lower sides, wherein
said first and second grippers (4a, 4b) are adapted to move confronting ends of said workpieces (T1, T2) towards each other into abutting contact and to keep them in this position while said welding and shaping means (22) is active.

2. The apparatus according to claim 1, wherein said cutter (21) and said welding and shaping means (22) are incorporated in a single body to be switchably positioned transversely of the travelling path of the tape-like workpiece (T).

3. The apparatus according to any preceding claim, wherein said welding and shaping means (22) includes a pair of shaping pushers (22a, 22b; 22a', 22b') having confronting pressing surfaces, and a heater (22d, 22d') situated on a side opposite to the pressing surface of one of said shaping pushers (22b, 22b') and having parallel front and rear surfaces in the travelling path of the tape-like workpiece (T).

4. The apparatus according to claim 3, further comprising scrapers (24a, 24b) engageable with the front and rear surfaces of said heater (22d, 22d') for scraping off resin stuck to the front and rear surfaces.

5. The apparatus according to any preceding claim, comprising:
(a) a tape exchange and supply unit (1) including a predetermined number of take-up spools (11a) for winding up respective tape-like workpieces (T) in a common direction, and means (12) for supporting said spools (11a) in row, said supply unit (1) being capable of selectively moving and positioning each of said spools (11a) to a predetermined position; and
(b) means (3), situated at a fixed position forwardly of and near to said tape exchange and supply unit (1), for moving the tape-like workpiece (T) forwardly and backwardly to a predetermined length in the travelling path, wherein
said first and second tape grippers (4a, 4b) are situated downstream of said moving means (3).

6. The apparatus according to claim 5, wherein said tape exchange and supply unit (1) includes a spool pallet (13), a detachably attaching portion for locking said spool pallet (13) in a fixed position, and a slide table (14) movable to a position in alignment with said supporting means (12).

7. The apparatus according to claim 5, wherein said tape exchange and supply unit (1) is equipped with a spool pallet (13) movable to a position in alignment with said supporting means (12).

8. The apparatus according to claim 5, wherein said tape exchange and supply unit (1) is equipped with a spool pallet (13) detachable from said tape exchange and supply unit (1) and movable to a position in alignment with said supporting means (12).

9. The apparatus according to any of claims 5 to 8, wherein said tape exchange and supply unit (1) is situated in the travelling path of the individual tape-like workpiece (T) and has means (7) for restricting and releasing the movement of the tape-like workpiece (T).

10. The apparatus according to claim 9, wherein the restricting and releasing of said restricting and releasing means (7) takes place in response to the forward and backward movements of the tape-like workpiece (T) by said moving means (3).

11. The apparatus according to any of claims 5 to 10, wherein said supporting means (12) is equipped with a spool exchange mechanism (12a, 12b).

12. The apparatus according to any of claims 5 to 11, wherein said moving means (3) includes a pair of pressing rollers (3a, 3b) movable into and out of press contact with opposite surfaces of the tape-like workpiece (T) and rotatable a predetermined number of rotations when they are in press contact with the tape-like workpiece (T).

13. The apparatus according to claim 12, further comprising a guide plate (16), which is situated at a front end of said spool pallet (13) along a imaginary line passing both said supporting means (12) and said restricting and releasing means (7) of said tape exchange and supply unit (1) and has a tape exposing surface (16b) on which the tape-like workpiece (T) is to be exposed and a fitting surface (16a) in which said pressing rollers (3a, 3b) are fitted, for gripping and guiding the tape-like workpiece (T).

14. The apparatus according to any preceding claim, further comprising a control unit for program-controlling the operation procedure of the above-mentioned individual components of said apparatus according to a preset procedure and for driving the individual components according to the program-controlled operation procedure.

## Patentansprüche

1. Vorrichtung zum automatischen Schneiden, Schweißen und Verbinden von Enden von bandartigen Werkstücken, mit:
(a) einem ersten und einem zweiten Bandgreifer (4a, 4b), die entlang einem Transportweg eines bandartigen Werkstücks (T) einander gegenüberliegend angeordnet sind, um das bandartige Werkstück (T) lösbar zu greifen und sich in dem Transportweg aufeinander zu und voneinander weg zu bewegen;
(b) einer Schneideeinrichtung (21), die zwischen dem ersten und dem zweiten Bandgreifer (4a, 4b) angeordnet ist, um das bandartige Werkstück (T) quer zu schneiden; und
(c) einer Einrichtung (22) zum Verschweißen eines hinteren Endes eines vorhergehenden bandartigen Werkstücks (T1) mit einem vorderen Ende eines darauffolgenden bandartigen Werkstücks (T2) und zum Flachformen des geschweißten Abschnitts der aufeinanderfolgenden bandartigen Werkstücke (T1, T2) durch Pressen des geschweißten Abschnitts von einer unteren und einer oberen Seite, wobei
der erste und der zweite Greifer (4a, 4b) dazu ausgelegt sind, gegenüberliegende Enden der Werkstücke (T1, T2) aufeinander zu in anstoßenden Kontakt zu bewegen und sie in dieser Position zu halten, während die Schweiß- und Formeinrichtung (22) aktiv ist.

2. Vorrichtung nach Anspruch 1, bei der die Schneideinrichtung (21) und die Schweiß- und Formeinrichtung (22) in einem einzigen Körper eingebaut sind, um quer zu dem Transportweg des bandartigen Werkstücks (T) in umschaltbarer Weise positioniert zu werden.

3. Vorrichtung nach einem der vorstehenden Ansprüche, bei der die Schweiß- und Formeinrichtung (22) ein Paar von Form-Schiebeelementen (22a, 22b; 22a', 22b') mit gegenüberliegenden Preßoberflächen und eine an einer der Preßoberfläche eines der Form-Schiebeelemente (22b, 22b') gegenüberliegenden Seite angeordnete Heizeinrichtung (22d, 22d') mit parallelen Vorder- und Hinteroberflächen in dem Transportweg des bandartigen Werkstücks (T) aufweist.

4. Vorrichtung nach Anspruch 3, ferner mit mit der vorderen und der hinteren Oberfläche des Heizers (22d, 22d') in Eingriff bringbaren Kratzelementen (24a, 24b) zum Abkratzen von an der vorderen und an der hinteren Oberfläche haftendem Kunststoff.

5. Vorrichtung nach einem der vorstehenden Ansprüche, mit:
(a) einer Bandaustausch- und -zuführeinheit (1) mit einer vorbestimmten Anzahl von Aufnahmespulen (11a) zum Aufwickeln von entsprechenden bandartigen Werkstücken (T) in einer gemeinsamen Richtung und einer Einrichtung (12) zum Halten der Spulen (11a) in Reihe, wobei die Zuführeinheit (1) jede der Spulen (11a) in eine vorbestimmte Position selektiv bewegen und positionieren kann; und
(b) einer Einrichtung (3), die in einer festgelegten Position vor und nahe der Bandaustausch- und -zuführeinheit (1) angeordnet ist, um das bandartige Werkstück (T) um eine vorbestimmte Länge in dem Transportweg vorwärts und rückwärts zu bewegen, wobei
der erste und der zweite Bandgreifer (4a, 4b) stromabwärts von der Bewegungseinrichtung (3) angeordnet sind.

6. Vorrichtung nach Anspruch 5, bei der die Bandaustausch- und -zuführeinheit (1) eine Spulenpalette (13), einen Abschnitt zur abnehmbaren Befestigung zum Verriegeln der Spulenpalette (13) in einer festgelegten Position und einen in eine mit der Halteeinrichtung (12) ausgerichtete Position bewegbaren Gleittisch (14) aufweist.

7. Vorrichtung nach Anspruch 5, bei der die Bandaustausch- und -zuführeinheit (1) mit einer in eine mit der Halteeinrichtung (12) ausgerichtete Position bewegbaren Spulenpalette (13) ausgestattet ist.

8. Vorrichtung nach Anspruch 5, bei der die Bandaustausch- und -zuführeinheit (1) mit einer von der Bandaustausch- und -zuführeinheit (1) abnehmbaren und in eine mit der Halteeinrichtung (12) ausgerichtete Position bewegbaren Spulenpalette (13) ausgestattet ist.

9. Vorrichtung nach einem der Ansprüche 5 bis 8, bei der die Bandaustausch- und -zuführeinheit (1) in dem Transportweg des einzelnen bandartigen Werkstücks (T) angeordnet ist und eine Einrichtung (7) zum Begrenzen und Freigeben der Bewegung des bandartigen Werkstücks (T) aufweist.

10. Vorrichtung nach Anspruch 9, bei der die Begrenzung und Freigabe durch die Begrenzungs- und Freigabeeinrichtung (7) ansprechend auf die Vorwärts- und Rückwärtsbewegungen des bandartigen Werkstücks (T) durch die Bewegungseinrichtung (3) stattfinden.

11. Vorrichtung nach einem der Ansprüche 5 bis 10, bei der die Halteeinrichtung (12) mit einem Spulenaustauschmechanismus (12a, 12b) ausgestattet ist.

12. Vorrichtung nach einem der Ansprüche 5 bis 11, bei der die Bewegungseinrichtung (3) ein Paar von Preßrollen (3a, 3b) aufweist, die in und aus einem Preßkontakt mit entgegengesetzten Oberflächen des bandartigen Werkstücks (T) bewegbar und, wenn sie in Preßkontakt mit dem bandartigen Werkstück (T) sind, um eine vorbestimmte Zahl von Drehungen drehbar sind.

13. Vorrichtung nach Anspruch 12, ferner mit einer Führungsplatte (16), die an einem Vorderende der Spulenpalette (13) entlang einer durch sowohl die Halteeinrichtung (12) als auch die Begrenzungs- und Freigabeeinrichtung (7) der Bandaustausch- und -zuführeinheit (1) verlaufenden imaginären Linie angeordnet ist und eine Bandoffenhalteoberfläche (16b), auf der das bandartige Werkstück (T) offengehalten werden soll, und eine Paßoberfläche (16a) aufweist, in die die Preßrollen (3a, 3b) eingepaßt werden, und zwar um das bandartige Werkstück (T) zu greifen und zu führen.

14. Vorrichtung nach einem der vorstehenden Ansprüche, ferner mit einer Steuereinheit zur Programmsteuerung des Betriebsablaufs der oben beschriebenen einzelnen Komponenten der Vorrichtung gemäß einem vorgegebenen Ablauf und zum Antreiben der einzelnen Komponenten gemäß dem programmgesteuerten Betriebsablauf.

## Revendications

1. Appareil servant à couper, souder et raccorder de manière automatique les extrémités de pièces en forme de rubans, comprenant :
(a) des premier et deuxième dispositifs (4a, 4b) de saisie de ruban, situés en face l'un de l'autre le long d'un trajet de déplacement d'une pièce (T) en forme de ruban pour saisir de façon libérable la pièce (T) en forme de ruban et pouvant se déplacer pour s'approcher ou s éloigner l'un de l'autre dans le trajet de déplacement,
(b) une lame (21) placée entre lesdits premier et deuxième dispositifs (4a, 4b) de saisie de ruban pour couper transversalement la pièce (T) en forme de ruban, et
(c) un moyen (22) servant à souder l'extrémité arrière d'une pièce précédente (T1) en forme de ruban à l'extrémité avant d'une pièce suivante (T2) en forme de ruban, et servant à donner à la partie soudée des pièces successives (T1, T2) en forme de rubans une forme plate par compression de la partie soudée depuis les côtés supérieur et inférieur,
dans lequel lesdits premier et deuxième dispositifs (4a, 4b) de saisie sont aptes à déplacer les extrémités en vis-à-vis desdites pièces (T1, T2) l'une vers l'autre, pour les amener en contact bout à bout, et à les maintenir dans cette position tandis que ledit moyen (22) de soudure et de mise en forme est actif.

2. Appareil selon la revendication 1, dans lequel ladite lame (21) et ledit moyen (22) de soudure et de mise en forme sont incorporés dans un corps unique pour être placés transversalement au trajet de déplacement de la pièce (T) en forme de ruban de manière intervertissable.

3. Appareil selon l'une quelconque des précédentes revendications, dans lequel ledit moyen (22) de soudure et de mise en forme comprend une paire de poussoirs de mise en forme (22a, 22b; 22a', 22b') ayant des surfaces de pression qui se font face, et un dispositif chauffant (22d, 22d') placé sur le côté opposé à la surface de pression de l'un desdits poussoirs de mise en forme (22b; 22b') et ayant des surfaces avant et arrière parallèles placées dans le trajet de déplacement de la pièce (T) en forme de ruban.

4. Appareil selon la revendication 3, comprenant en outre des grattoirs (24a, 24b) pouvant coopérer avec les surfaces avant et arrière dudit dispositif chauffant (22d, 22d') pour détacher, par grattage, de la résine collée aux surfaces avant et arrière.

5. Appareil selon l'une quelconque des précédentes revendications, comprenant :
(a) une unité (1) d'amenée et d'échange de rubans, qui contient un nombre prédéterminé de bobines réceptrices (11a) servant à enrouler des pièces respectives (T) en forme de ruban dans une même direction, et un moyen (12) servant à supporter lesdites bobines (11a) en une rangée, ladite unité d'amenée (1) pouvant déplacer et positionner de manière sélective chacune desdites bobines (11a) vers une position prédéterminée, et
(b) un moyen (3) placé en une position fixe en avant, et à proximité, de ladite unité (1) d'amenée et d'échange de rubans, servant à déplacer la pièce (T) en forme de ruban vers l'avant et vers l'arrière sur une longueur prédéterminée dans le trajet de déplacement,
dans lequel lesdits premier et deuxième dispositifs (4a, 4b) de saisie de ruban sont situés en aval dudit moyen de déplacement (3).

6. Appareil selon la revendication 5, dans lequel ladite unité (1) d'amenée et d'échange de rubans contient une palette à bobines (13), une partie de fixation amovible servant à bloquer ladite palette à bobines (13) dans une position fixée et une table coulissante (14) pouvant être déplacée vers une position d'alignement avec ledit moyen de support (12).

7. Appareil selon la revendication 5, dans lequel ladite unité (1) d'amenée et d'échange de rubans est équipée d'une palette à bobines (13) pouvant être déplacée vers une position d'alignement avec ledit moyen de support (12).

8. Appareil selon la revendication 5, dans lequel ladite unité (1) d'amenée et d'échange de rubans est équipée d'une palette à bobines (13) pouvant être détachée de ladite unité (1) d'amenée et d'échange de rubans et déplacée vers une position d'alignement avec ledit moyen de support (12).

9. Appareil selon l'une quelconque des revendications 5 à 8, dans lequel ladite unité (1) d'amenée et d'échange de rubans est placée dans le trajet de déplacement de la pièce individuelle (T) en forme de ruban et comporte un moyen (7) servant à empêcher et autoriser le déplacement de la pièce (T) en forme de ruban.

10. Appareil selon la revendication 9, dans lequel ledit moyen (7) d'empêchement et d'autorisation empêche ou autorise le déplacement en réponse aux mouvements d'avancée et de recul de la pièce (T) en forme de ruban provoqués par ledit moyen de déplacement (3).

11. Appareil selon l'une quelconque des revendications 5 à 10, dans lequel ledit moyen de support (12) est équipé d'un mécanisme (12a, 12b) de remplacement de bobines.

12. Appareil selon l'une quelconque des revendications 5 à 11, dans lequel ledit moyen de déplacement (3) comprend une paire de galets presseurs (3a, 3b) pouvant être déplacés pour venir en contact de pression, et hors de contact, avec les surfaces opposées de la pièce (T) en forme de ruban et pouvant effectuer un nombre prédéterminé de tours quand ils sont en contact de pression avec la pièce (T) en forme de ruban.

13. Appareil selon la revendication 12, comprenant en outre une plaque de guidage (16) qui est située en l'extrémité avant de ladite palette à bobines (13) le long d'une ligne imaginaire passant à la fois par ledit moyen de support (12) et par ledit moyen (7) d'empêchement et d'autorisation de ladite unité (1) d'amenée et d'échange de rubans et qui comporte une surface (16b) d'exposition de ruban, sur laquelle ladite pièce (T) en forme de ruban doit être exposée, et une surface de fixation (16a) dans laquelle lesdits galets presseurs (3a, 3b) sont montés, pour saisir et guider la pièce (T) en forme de ruban.

14. Appareil selon l'une quelconque des précédentes revendications, comprenant en outre une unité de commande servant à commander par programme la procédure de fonctionnement des composants individuels mentionnés ci-dessus dudit appareil selon une procédure établie à l'avance et à actionner les composants individuels selon la procédure de fonctionnement commandée par le programme.
